# EUROPÄISCHE PATENTANMELDUNG

(11) **EP 1 380 869 A1**
(43) Veröffentlichungstag der Anmeldung: **14.01.2004**
(21) Anmeldenummer: 02015227.8
(22) Anmeldetag: 09.07.2002
(51) Int. Cl.: G02B 6/50

(54) **Verfahren und Vorrichtung zur Befestigung eines Lichtwellenleiterkabels in einer nicht begehbaren Rohrleitung**

(71) Anmelder: KA-TE System AG, 8807 Freienbach (CH)
(72) Erfinder: Nussbaumer, Beat, 8854 Siebnen (CH)
(74) Vertreter: Patentanwälte Schaad, Balass, Menzl & Partner AG

(57) **Zusammenfassung**

Zum Fixieren eines langgestreckten Gegenstandes (14), beispielsweise eines Lichtwellenleiterkabels oder eines zur Aufnahme eines Lichtwellenleiterkabels bestimmten Rohres (16) in einer nicht begehbaren Rohrleitung (10) werden Ballone (18) beispielsweise mittels eines Roboters in die Rohrleitung (10) eingebracht und an der gewünschten Stelle aufgeblasen und gesetzt. Anschliessend wird ein Liner (28) nach dem Umstülp- bzw. Insituform-Verfahren in die Rohrleitung (10) eingebracht. Dadurch wird der langgestreckte Gegenstand (14) zwischen der Rohrleitung (10) und dem Liner (28) eingeschlossen. Beim Einbringen des Linders (28) werden die Ballone (10) jeweils gelüftet oder zerstört.

## Beschreibung

Die vorliegende Erfindung betrifft ein Verfahren zum Befestigen und eine Vorrichtung zum Fixieren eines langgestreckten Gegenstandes, wie eines Lichtwellenleiterkabels oder eines zur Aufnahme eines Lichtwellenleiterkabels bestimmten Rohres, in einer nicht begehbaren Rohrleitung.

Ein Verfahren und eine Vorrichtung dieser Art sind in der älteren internationalen Patentanmeldung Nr. PCT/CH02/00006 offenbart. Ein beispielsweise als Lichtwellenleiterkabel ausgebildetes Datenkabel wird in einem Hauptrohr entlang der Rohrinnenwand wenigstens annähernd geradlinig und tangential an eine Verbindungskante vom Hauptrohr mit einem Nebenrohr herangeführt. Im Nebenrohr wird das Datenleitungskabel schraubenlinienförmig knickfrei verlegt. Mittels eines rohrleitungsgängigen Roboters wird im Nebenrohr das Datenleitungskabel mittels Befestigungsmitteln, wie Klebstoff oder Klebstreifen punktweise fixiert. Anschliessend wird in das Nebenrohr ein Liner eingebracht, der im ausgehärteten Zustand das Datenleitungskabel zwischen sich und dem Nebenrohr einschliesst. Im Nebenrohr kann das Datenleitungskabel auch mittels selbstfedernden Briden befestigt werden, die im Abstand am Datenleitungskabel angeordnet und zum Einführen in das Nebenrohr zu einem geschlossenen Ring geformt sind, welcher einen kleineren Aussendurchmesser als der lichte Querschnitt des Nebenrohres aufweist. Die Briden werden mittels eines Drahtes in dieser Form gehalten; beim Herausziehen dieses Drahtes weiten sich die Briden auf und legen sich selbständig an die Innenwand des Nebenrohres an. Das Innenauskleiden von Abwasserrohrleitungen mittels Liner oder auch Inliner genannt, wird seit Jahren zur Abwasserrohrleitungs- und Kanalsanierung verwendet. Dabei wird ein konfektioniertes, mit Kunstharz getränktes Trägermaterial in Schlauchform, z. B. ein Gewebe, in die Abwasserrohrleitung eingebracht und unter Druck an die Innenwand angepresst. Beim sogenannten Insituform-Verfahren wird der flexible, mit Kunstharz getränkte Trägermaterialschlauch mittels Wasser oder Druckluft im Inversionsverfahren, auch Umstülpverfahren genannt, in die zu sanierende Rohrleitung eingebracht und an die Innenwand angepresst.

Es ist eine Aufgabe der vorliegenden Erfindung, ein Verfahren und eine Vorrichtung zu schaffen, mittels welchem bzw. welcher langgestreckte Gegenstände rasch und sicher auch in Rohrleitungen mit kleinen Durchmessern befestigt bzw. fixiert werden können.

Diese Aufgabe wird mit einem Verfahren und einer Vorrichtung gemäss dem Anspruch 1 bzw. 6 gelöst.

Mittels Ballonen lässt sich der langgestreckte Gegenstand auf einfache Art und Weise in der Rohrleitung fixieren. Dies ist selbst in Rohrleitungen kleinen Durchmessers von beispielsweise 100 mm möglich. Ballone gleicher Grösse lassen sich in Rohrleitungen mit unterschiedlichem Innendurchmesser für das Fixieren der langgestreckten Gegenstände verwenden.

Die Vorrichtung kann kurvengängig und im Durchmesser klein ausgebildet werden. Sie kann in Rohrleitungen mit unterschiedlichem Innendurchmesser eingesetzt werden, um die Ballone an den gewünschten Stellen zu setzen. Da die Ballone in der Rohrleitung automatisch eine richtige Lage einnehmen, kann die Vorrichtung äusserst einfach ausgebildet sein.

In einer besonders bevorzugten Ausbildungsform wird der langgestreckte Gegenstand vor dem Aufblasen wenigstens eines Ballons in seiner Lage, in Umfangsrichtung der Rohrleitung gesehen, positioniert. So kann beispielsweise in Krümmungen der Rohrleitung sichergestellt werden, dass der langgestreckte Gegenstand entlang des bezüglich der Krümmung radial aussenliegenden Innenwandbereichs der Rohrleitung verläuft. Weiter lässt sich dadurch der langgestreckte Gegenstand um Einläufe herum verlegen und mittels den Ballonen fixieren. Weiter kann der langgestreckte Gegenstand entlang der Firstlinie der Rohrleitung verlegt werden, wodurch die Strömungsverhältnisse in der Rohrleitung nach dem Einbringen des Liners unbeeinflusst bleiben.

Weitere bevorzugte Weiterbildungen des erfindungsgemässen Verfahrens und bevorzugte Ausführungsformen der erfindungsgemässen Vorrichtung sind in den weiteren abhängigen Patentansprüchen angegeben.

Die Erfindung wird anhand eines in der Zeichnung dargestellten Ausführungsbeispiels näher beschrieben. Es zeigen rein schematisch:
- Fig. 1: einen vertikalen Längsschnitt durch einen Abschnitt einer Rohrleitung mit einem darin mittels eines Ballons fixierten Rohr;
- Fig. 2: einen Schnitt entlang der Linie II-II der Fig. 1;
- Fig. 3: in einem vertikalen Längsschnitt einen, verglichen mit Fig. 1, längeren Abschnitt einer Rohrleitung mit einem darin mittels Ballonen fixierten Lichtwellenleiterkabel und einem Liner während des Einbringens nach dem Umstülp-Verfahren;
- Fig. 4: in perspektivischer Darstellung einen Teil einer Vorrichtung zum Positionieren des langgestreckten Gegenstandes und zum Fixieren dieses Gegenstandes mittels Ballonen in der Rohrleitung;
- Fig. 5: eine Ansicht in Richtung des Pfeiles V der Fig. 4 der dort gezeigten Vorrichtung in einer Rohrleitung;
- Fig. 6: in perspektivischer Darstellung einen Teil der in den Fig. 5 und 6 gezeigten Vorrichtung mit ausgeschwenkten Stützelementen während der Vorbeibewegung eines Führungselements für den langgestreckten Gegenstand an einem der Stützelemente;
- Fig. 7: ebenfalls in perspektivischer Darstellung einen Teil der in den Fig. 4 bis 6 gezeigten Vorrichtung mit einem Drehantrieb für das Führungselement;
- Fig. 8: den Halsteil eines Ballons mit einem Abschnitt einer Schnur als Verschlusselement; und
- Fig. 9: in perspektivischer Darstellung ein Verschlusselement mit daran ausgebildeten Reihen von Spitzen zum Zerstören des Ballons beim Verlegen des Liners.

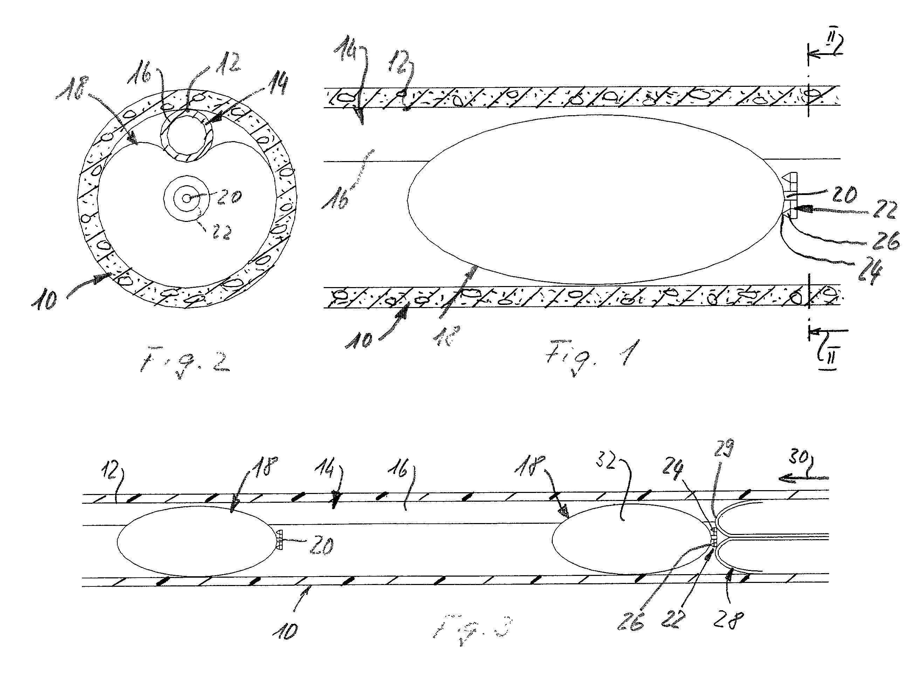

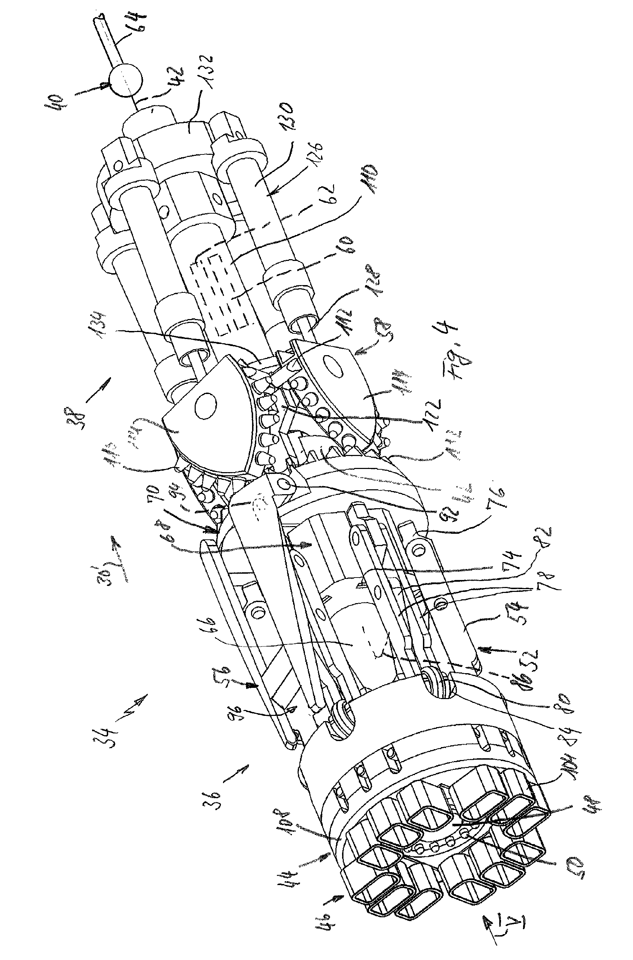

Die Fig. 1 und 2 zeigen einen vertikalen Längsschnitt bzw. einen Querschnitt durch einen Abschnitt einer Rohrleitung 10 aus Beton. Es kann sich dabei beispielsweise um die Abwasserrohrleitung eines Gebäudes handeln, die vom Gebäude zu einer Sammelleitung in bekannter Art und Weise verläuft. Der Innendurchmesser der Rohrleitung 10 beträgt im gezeigten Beispiel 100 mm. Die Rohrleitung kann jedoch auch grösseren Durchmessers sein, sie ist jedoch nicht begehbar. Entlang einer Firstlinie 12 der Rohrleitung 10 verläuft ein langgestreckter Gegenstand 14 in der Form eines Rohres 16, das mittels eines Ballons 18 in der gezeigten Lage fixiert ist. Das Rohr ist dazu bestimmt, ein Lichtwellenleiterkabel aufzunehmen, das nach dem Verlegen des Rohres 16 darin eingezogen wird oder bereits vorher eingezogen worden ist.

Es ist selbstverständlich auch denkbar, ein armiertes Lichtwellenleiterkabel direkt mittels Ballonen 18 in der Rohrleitung 10 zu fixieren. Diesbezüglich und im Hinblick auf eine bevorzugte Führung des Rohres 16 bzw. des Lichtwellenleiterkabels oder allgemeiner eines Datenkabels, insbesondere in der Nähe einer Einmündung in eine Hauptrohrleitung, wird auf die internationale Patentanmeldung PCT/CH02/00006 verwiesen.

Der Hals 20 des Ballons ist mittels eines Verschlusselements 22 in bekannter Art und Weise verschlossen. Am Verschlusselement 22 sind eine Spitze 24 aufweisende Zerstörungselemente 26 angeformt, auf deren Aufgabe und Funktionsweise weiter unten einzugehen ist.

Fig. 3 zeigt einen Abschnitt einer Rohrleitung 10 aus Kunststoff, in welche ebenfalls ein für die Aufnahme eines Lichtwellenleiter- oder Datenkabels bestimmtes Rohr 16 eingezogen ist. Dieses Rohr 16 wird mittels Ballonen 18, die hintereinander mit Abstand positioniert und aufgeblasen worden sind, entlang der Firstlinie 12 der Rohrleitung 10 gehalten.

In die Rohrleitung 10 wird nach dem Setzen der Ballone 18 ein Liner 28, auch Inliner genannt, nach dem allgemein bekannten Umstülp- bzw. Insituform-Verfahren eingebracht. Dabei wird der langgestreckte Gegenstand 14, d.h. im gezeigten Beispiel das Rohr 16 zwischen der Rohrleitung 10 und dem Liner 28 eingeschlossen, wie dies auch Fig. 2 im Querschnitt zeigt. Erreicht der Liner 28 beim Umstülpen mit seinem vorauslaufenden Ende 29 einen Ballon 18, wird dieser zerstört. Die Reste des Ballons 18 werden ebenfalls zwischen der Rohrleitung 10 und dem Liner 28 eingeschlossen. Der Ballon 28 kann auf unterschiedliche Weise zerstört werden. Wie in den Fig. 1 und 3 gezeigt können die Ballone ein Verschlusselement 22 mit Zerstörungselementen 26 aufweisen. Die Ballone 18 sind derart in die Rohrleitung 10 eingebracht, dass die Verschlusselemente 22 gegen die Einbringrichtung 30 des Liners 28 gerichtet sind. Sobald der Liner 28 einen Ballon 18 erreicht, wirkt er auf das Zerstörungselement 26 ein, welches in Richtung gegen die Hülle 32 des Ballons 18 und gegebenenfalls auch in schräger Richtung gedrückt wird. Dabei kommen Spitzen 24 des Zerstörungselements 26 an die Hülle 32 zur Anlage und zerstören diese, wodurch der Ballon 18 gelüftet ist.

Es ist auch möglich, auf ein Zerstörungselement 26 zu verzichten; in diesem Fall werden die Ballone 18 durch den vom Liner 28 ausgeübten Druck zerstört. Es ist auch denkbar, den Hals 20 der Ballone 18 mit Ventilen auszurüsten, die entweder bei einem bestimmten Überdruck - ausgeübt durch den Liner 28 - oder mechanisch durch den Liner 28 betätigt öffnen. Auch eine Zerstörung auf chemischem Wege ist möglich.

Mittels der Ballone 18 ist der langgestreckte Gegenstand 14 in der Rohrleitung 10 vorübergehend an den gewünschten Stellen fixiert, bis er vom Liner 28 zwischen diesem und der Rohrleitung 10 gehalten ist.

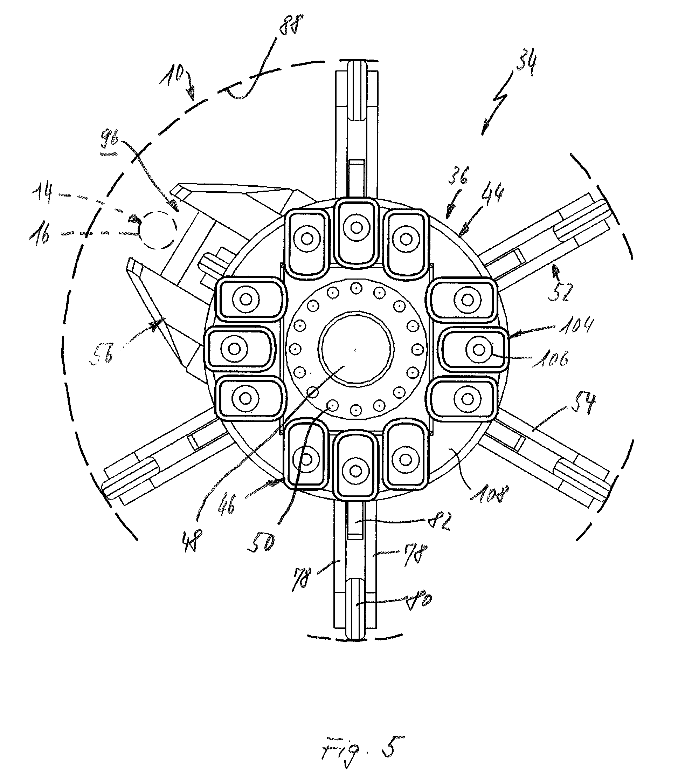

Die Ballone 18 können beispielsweise mittels eines rohrleitungsgängigen Roboters 34, wie er in den Fig. 4 bis 7 gezeigt ist, in die Rohrleitung 10 eingebracht und an der gewünschten Stelle durch Aufblasen gesetzt werden. Dieser Roboter 34 dient auch dazu, wo notwendig, den langgestreckten Gegenstand 14 in Umfangsrichtung der Rohrleitung 10 gesehen, in die gewünschte Lage zu verbringen.

Der Roboter 34 weist drei hintereinander angeordnete Module 36, 38, 40 auf, die mittels Kardangelenken 42 drehfest, jedoch schwenkbar miteinander verbunden sind.

Das Kopfmodul 36 weist an seinem freien Ende einen Kopf 44 mit einer Magazineinrichtung 46 für Ballone 18, eine Fernsehkamera 48 und Beleuchtungselemente 50 auf. Weiter sind dem Kopfmodul 36 sechs in Umfangsrichtung gleichmässig verteilte Stützelemente 52 in Form von Stützhebeln 54 zugeordnet, die dazu bestimmt sind, das Kopfmodul 36 wenigstens annähernd in der Achse der Rohrleitung 10 zu halten. Schlussendlich weist das Kopfmodul 36 ein hebelartig ausgebildetes Führungselement 56 auf, das uneingeschränkt in beiden Drehrichtungen um die Längsachse des Kopfmoduls 36 drehbar ausgebildet und dazu bestimmt ist, wo notwendig, den langgestreckten Gegenstand 14, in Umfangsrichtung der Rohrleitung 10 und des Roboters 34 gesehen, in die gewünschte Position zu verbringen.

Auf der dem Kopf 44 abgewandten Seite des Kopfmoduls 36 ist an dieses mittels eines Kardangelenks 42 das Antriebsmodul 38 angekoppelt. Es weist einerseits einen Drehantrieb 58 für das Führungselement 56 und andererseits ein Antriebselement 60 für die Stützhebel 54 sowie ein Antriebselement 62 für die Schwenkbewegung des Führungselements 56 auf.

Das Antriebsmodul 38 ist auf der dem Kopfmodul 36 abgewandten Seite mittels eines weiteren Kardangelenks 42 an das nur schematisch angedeutete Steuerungsmodul 40 angelenkt. Dieses weist eine allseitig verschlossene zylinderförmige Hülle auf; im dieser Hülle umschlossenen Innenraum sind Steuerventile für den Drehantrieb 58 und die Antriebselemente 60, 62 angeordnet. Die Steuerventile sind über eine flexible Steuer- und Speiseleitung 64 mit einer sich ausserhalb der Rohrleitung 10 befindenden nicht gezeigten Steuer- und Speiseeinrichtung verbunden. Derartige Steuer- und Speiseeinrichtungen sind allgemein bekannt.

Der in den Fig. 4 bis 7 gezeigte Roboter 34 ist nicht selbst fahrbar ausgebildet, sondern wird in allgemein bekannter Art und Weise mittels der Steuer- und Speiseleitung 64 oder einer diese ummantelnden flexiblen Welle in Arbeitsrichtung 30', die der Einbringrichtung 30 des Liners 28 entgegengesetzt ist, durch die Rohrleitung 10 gezogen. Entgegen der Arbeitsrichtung 30' kann der Roboter 34 mittels eines Seilzuges in bekannter Art und Weise durch die Rohrleitung 10 gezogen werden. Dieser Seilzug wird jedoch entfernt, bevor der Roboter 34 mit dem Setzen von Ballonen 18 beginnt. Es ist auch möglich auf einen solchen Seilzug zu verzichten, wenn die genannten flexible Welle genügend steif ist, um den Roboter 34 durch die Rohrleitung 10 zu stossen.

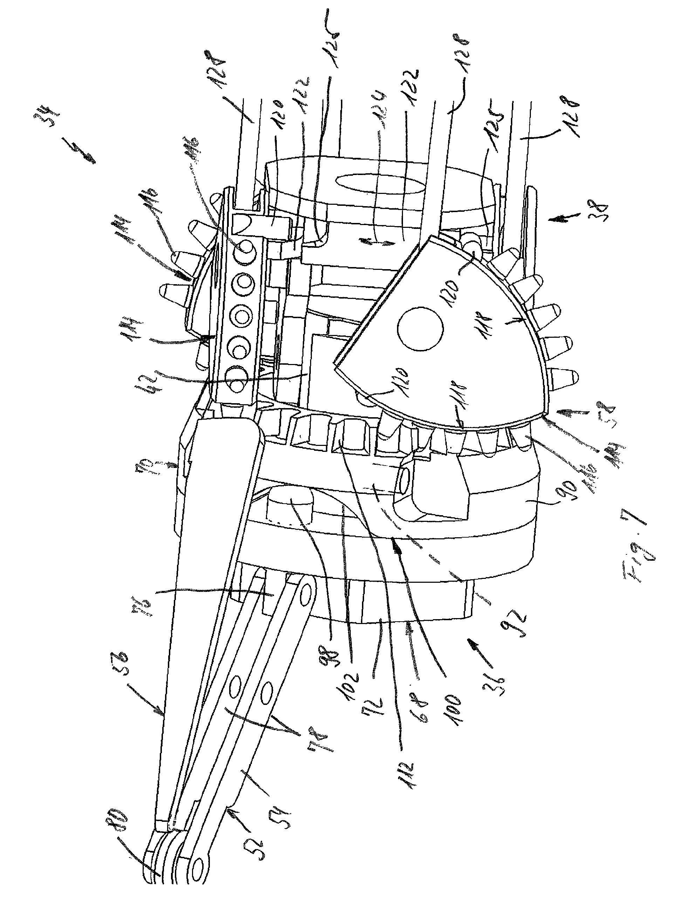

Anhand der Fig.4, 5 und 6 wird nun das Kopfmodul 36 näher beschrieben. Auf einem zentralen Rohr 66 ist der Kopf 44 drehfest, jedoch in Längsrichtung verschiebbar gelagert. Vom Kopf 44 beabstandet sitzt auf dem zentralen Rohr 66 sowohl verdreh- als auch verschiebefest eine Lagereinrichtung 68 für die Stützhebel 54. Auf der dem Kopf 44 abgewandten Seite der Lagereinrichtung 68 folgt dieser eine Drehlageranordnung 70 für das Führungselement 56, welches weiter unten im Zusammenhang mit der Fig. 7 zu beschreiben ist. Das vom Kopf 44 abgewandte Ende des zentralen Rohres 66 ist an das Kardangelenk 42 angelenkt. Im Innern des zentralen Rohres 66 wirkt zwischen diesem und dem Kopf 44 eine Feder, die den Kopf 44 in axialer Richtung mit einer in Richtung gegen die Lagereinrichtung 68 zeigenden Kraft beaufschlagt.

Die Lagereinrichtung 68 weist einen auf dem zentralen Rohr 66 festsitzenden Lagerkörper 72 mit sechs in Umfangsrichtung verteilten, in Längsrichtung des Kopfmoduls 36 verlaufenden T-Nuten 74 auf. In jeder dieser T-Nuten 74 ist ein Gleitkörper 76 gelagert, an dem ein Stützhebel 54 angelenkt ist. Dieser weist zwei parallele, gleich ausgebildete Hebellaschen 78 auf, zwischen welchen am freien Ende eine Stützrolle 80 angebracht ist, welche an den Hebellaschen 78 frei drehbar gelagert ist. Zwischen dem Gleitkörper 76 und der Stützrolle 80 ist an jedes Hebellaschenpaar 78 eine Betätigungslasche 82 angelenkt, die andernends an den Kopf 44 angelenkt ist. Wie dies aus den Fig. 4 und 6 hervorgeht, weist der Kopf 44 Ausnehmungen 84 auf, in welche hinein die Hebellaschen 78 mit der Stützrolle 80 bewegbar sind. In Ruhestellung der Stützhebel 54, welche in der Fig. 4 gezeigt ist, verlaufen die Hebellaschen 78 parallel zur Längsachse des Kopfmoduls 36, wobei die Stützrollen 80 nur mit einem Segment in radialer Richtung gesehen aus den Ausnehmungen 84 hervorstehen.

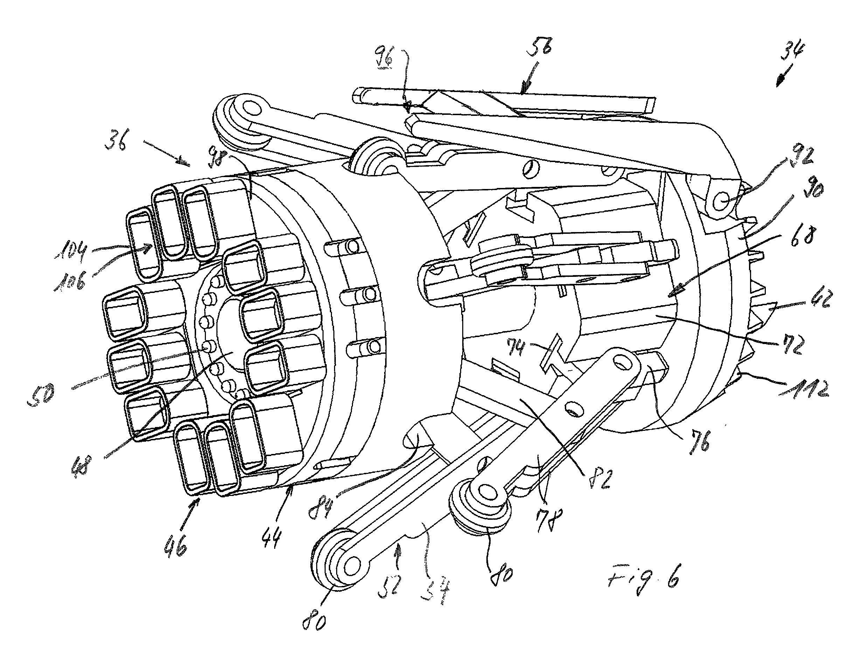

An jedem Stützhebel 54 ist das eine Ende einer strichpunktiert angedeuteten Zugleine 86 befestigt, welche andernends mit dem Antriebselement 60 verbunden ist. Die weiter oben erwähnte, auf den Kopf 44 in Richtung gegen den Gleitkörper 76 wirkende Federkraft wirkt über die Betätigungslaschen 82 auf die Hebellaschen 78 und beaufschlagt diese mit einer Kraft, welche mit einer Komponente in radialer Richtung gegen aussen wirkt. In Ruhestellung der Stützelemente 54 ist diese Kraft durch die vom Antriebselement 60 auf die Zugleinen 86 ausgeübte Zugkraft überkompensiert, so dass die Stützhebel 54 sicher in Ruhestellung gehalten sind. Wird mittels des Antriebselements 60 die Zugkraft auf die Zugleinen 86 verringert, bewegt sich der Kopf 44 in Richtung gegen den Gleitkörper 76 bei gleichzeitigem Verschwenken der Stützhebel 54 um die Anlenkung an den Gleitkörpern 76 in radialer Richtung gegen aussen in eine Arbeitsstellung geschwenkt, in welcher sie, wie in der Fig. 5 gezeigt, an der Innenwand 88 der Rohrleitung 10 mit den Stützrollen 80 anliegen. Gegengleich können mittels der Zugleinen 86 die Stützhebel 54 in die Ruhestellung eingefahren werden, wobei gleichzeitig der Kopf entgegen der Federkraft vom Lagerkörper 72 wegbewegt wird. Das Einfahren der Stützhebel 54 in die Ruhestellung ist somit via das Antriebselement 60 zwangsgesteuert.

Die Drehlageranordnung 70 weist einen Drehteller 90 auf, an dem das hebelartig ausgebildete Führungselement 56 um eine rechtwinklig zur Längsachse des Kopfmoduls 36 verlaufende Welle 92 schwenkbar angelenkt ist. Mittels einer gestrichelt angedeuteten Drehfeder 94 ist das Führungselement 56 mit einem Drehmoment beaufschlagt, welches in den Fig. 4 und 6 in Uhrzeigersinn wirkt und den Hebel mit einer Kraft beaufschlagt, welche eine Drehung aus der in der Fig. 4 gezeigten Ruhelage in eine in den Fig. 5 und 6 dargestellte Arbeitslage bewirkt. Entgegen dieses Drehmoments ist das Führungselement 56 mittels des Antriebselements 62 bewegbar. Die Verbindung zwischen dem Führungselement 56 und dem Antriebselement 62 kann beispielsweise ebenfalls über eine Zugleine erfolgen.

Das als Doppelhebel ausgebildete Führungselement 56 weist an seinem freien Ende eine Aufnahmenut 96 für den Gegenstand 14 auf; dieser ist in der Fig. 5 gestrichelt angedeutet.

Damit das Führungselement 56 beim Drehen des Drehtellers 90 um die Längsachse des Kopfmoduls 36 an den Stützhebeln 54 vorbeibewegt werden kann, weisen die Gleitkörper 76 an ihrem von den Hebellaschen 78 abgewandten Ende einen Gleitschuh 98 auf, mit welchem sie mit einer am Drehteller 90 ausgebildeten Steuerkulisse 100 zusammenwirken. Die Steuerkulisse 100 liegt in einer rechtwinklig zur Längsachse des Kopfmoduls 36 verlaufenden Ebene, mit Ausnahme im Bereich des Führungselements 56 bzw. dessen Anlenkung an den Drehteller 90, wo die Steuerkulisse 100 eine vom Kopf 44 weggerichtete Absenkung 102 aufweist, welche in der Fig. 7 gut erkennbar ist. Die Gleitkörper 76 sind in Richtung gegen den Drehteller 90 federbelastet, was dazu führt, dass die Gleitschuhe 98 dauernd an der Steuerkulisse 100 anliegen und somit der sich jeweils beim Führungselement 56 befindende Stützhebel 54 in die Ruhestellung verschwenkt wird, wie dies die Fig. 5 und 6 zeigen.

Die Fernsehkamera 48 ist am freien Ende des Kopfs 44 mittig angeordnet und ein Kranz Beleuchtungselemente 50 verläuft um die Fernsehkamera 48 herum. Radial ausserhalb der Beleuchtungselemente 50 befinden sich vier Gruppen à drei Aufnahmen 104 der Maganzineinrichtung 46 für je einen Ballon 18. In jeder Aufnahme 104 ist ein rohrartiger Adapter 106 angeordnet, auf welchen je der Hals 20 eines Ballones aufziehbar ist. Im fertig vorbereiteten Zustand befindet sich die Hülle 32 jedes Ballones in einer Aufnahme 104. Zu jeder der vier Gruppen von Aufnahmen 104 führt vom Steuerungsmodul 140 eine nicht gezeigte Druckleitung, welche einzelweise mittels Steuerventilen im Steuerungsmodul 40 mit Druckluft beaufschlagbar sind. Von jedem Adapter 106 verläuft ein Ventilstössel in eine entsprechende Ventilausnehmung im Kopf 44. Der Ventilstössel ist zusammen mit der zugeordneten Aufnahme 104 von einer Bereitschaftsstellung, in welcher die Aufnahmen 104 an einer Endplatte 108 des Kopfes 44 anliegt, in axialer Richtung, in eine Umschaltstellung bewegbar. Befinden sich alle Aufnahmen 104 einer Gruppe in Bereitschaftsstellung, ist nur der Adapter 106 einer ersten Aufnahme 104 mit dem zugeordneten Steuerventil im Steuerungsmodul 40 verbunden. Während der Stössel dieses Adapters 106 die Verbindung zu den beiden anderen Aufnahmen 104 versperrt. Wird durch Freigabe der Druckluft mittels des entsprechenden Steuerventils ein Ballon 18 aufgeblasen, löst sich dessen Hülle 32 automatisch aus der Aufnahme 104. Das Aufblasen erfolgt, bis der Ballon 18 in der Rohrleitung 10 fest sitzt; dann wird das Steuerventil geschlossen. Nach dem oder zum Verschliessen des Ballons wird der Roboter 34 in Arbeitsrichtung 30' um einen Hub bewegt. Dies hat zur Folge, dass die Aufnahme 104 mit dem Ventilstössel infolge des Festsitzens des Adapters 106 im Hals 20 des Ballons 18 aus der Bereitschaftsstellung in eine Umschaltstellung bewegt wird, in welcher die Aufnahme um einen Hub von beispielsweise 5-10 mm von der Endplatte 108 beabstandet ist. Diese Umstellung hat einerseits zur Folge, dass der Adapter 106 von der Druckleitung abgetrennt wird und andererseits gleichzeitig diese mit dem Adapter 106 der nächstfolgenden Aufnahme 104 der Gruppe verbunden wird. Dadurch kann automatisch ein Ballon 18 nach dem anderen einer Gruppe an der gewünschten Stelle in der Rohrleitung 10 gesetzt werden.

Nur der Vollständigkeit halber sei erwähnt, dass die von der Fernsehkamera 48 weglaufenden Leitungen sowie die Speiseleitung für die Beleuchtungselemente 50 durch das zentrale Rohr 60 hindurch zum Antriebsmodul 38, durch ein weiteres zentrales Rohr 110 des Antriebsmoduls 38 hindurch zum Steuerungsmodul 40, durch dieses hindurch und durch die Steuer- und Speiseleitung 64 zur Steuer- und Speiseeinrichtung verlaufen. Auch die Druckluftspeiseleitungen zu den Adaptern 106 verlaufen von diesen durch das zentrale Rohr 66 und das weitere zentrale Rohr 110 zum Steuerungsmodul 40.

Der Aufbau und die Funktionsweise des Antriebsmoduls 38 gehen insbesondere aus den Fig. 4 und 7 hervor. Der Drehteller 94 weist auf seiner der Steuerkulisse 100 abgewandten Seite einen Zahnkranz 112 auf. Dieser ist dazu bestimmt, mit an vier gleich ausgebildeten Drehsegmenten 114 angeordneten Zähnen 116 zusammen zu wirken. Die zwei Reihen von Zähnen 116 jedes Drehsegments 114 sind entlang von zwei Kreissektoren 118 angeordnet, an dessen Zentrum je ein Verriegelungsstift 120 sitzt. Jedem Drehsegment 114 ist ein Drehsinnschieber 122 zugeordnet, welcher in einer rechtwinklig zur Längsrichtung des Antriebsmoduls 38 verlaufenden Richtung hin- und herbewegbar ist, wie dies der Doppelpfeil 124 andeutet. An seinen Enden weist der Drehsinnschieber 122 je eine Ausnehmung 125 für je einen der beiden Verriegelungsstifte 120 auf. In der Fig. 7 gesehen, ist der weiter unten liegende der beiden Verriegelungsstifte 120 des in Ansicht sichtbaren Drehschiebers 122 in der betreffenden Ausnehmung 125 gehalten, so dass sich dieses Drehsegment 114 um diesen Verriegelungsstift 120 drehen kann. Der Antrieb des Drehsegments 114 erfolgt mittels eines in beiden Richtungen wirkenden Zylinderkolbenaggregats 126, dessen Kolbenstange 128 mittig am Drehsegment 114 angelenkt ist und dessen Zylinder 130 an einem auf dem weiteren zentralen Rohr 110 festsitzenden Lagerelement 132 angelenkt ist. Je zwei Drehsegmente 114 sind einander gegenüberliegend angeordnet und die zugeordneten Drehsinnschieber 122 und Zylinder-Kolbenaggregate 126 werden synchron angesteuert, desgleichen die beiden andern in der Art eines Kreuzes dazwischen angeordneten Drehsegmente 114. Die Ansteuerung der Zylinder-Kolbenaggregate 126 und der Drehsinnschieber 122 erfolgt mittels Steuerventilen im Steuerungsmodul 40.

Die Funktionsweise des Antriebsmoduls 38 ist wie folgt. Sind die Kolbenstangen 128 in die Zylinder-Kolbenaggregate 126 vollständig zurückgezogen, liegen die beiden Verriegelungsstifte 120 jedes Drehsegments 114 an einer Begrenzungsscheibe 134 an. Die Drehsegmente 114 befinden sich dabei in einer neutralen Lage, wobei keine Zähne 116 mit dem Zahnkranz 112 in Eingriff stehen. Dabei ist das Kardangelenk zwischen dem Kopfmodul 36 und Antriebsmodul 38 frei beweglich. Soll nun der Drehteller 90 und somit das Führungselement 56 in einer Richtung gedreht werden, werden die Drehsinnschieber 122 von zwei einander gegenüberliegenden Drehsegmenten 114 in entgegengesetzter Richtung verschoben, um die betreffenden Verriegelungsstifte 120 in der zugeordneten Ausnehmung 125 gefangen zu halten; in der Fig. 7 gesehen, beim sichtbaren Drehsegment 114 der weiter unten liegende Verriegelungsstift 120 und beim gegenüberliegenden nicht vollständig sichtbaren Drehsegment 114 der weiter oben liegende ebenfalls nicht sichtbare Verriegelungsstift 120. Anschliessend werden die diesen beiden Drehsegmenten 114 zugeordneten Zylinder-Kolbenaggregate 126 beaufschlagt, was zu einer entgegengesetzten Drehung der beiden Drehsegmente 114 um die gefangengehaltenen Verriegelungsstifte 120 führt, wodurch die betreffenden Zähne 116 eines Kreissektors 118 mit dem Zahnkranz 112 in Eingriff gelangen und diesen drehen. Ist der Drehteller 90 in derselben Drehrichtung weiter zu drehen, werden in genau gleicher Art und Weise die beiden anderen Drehsegmente 114 angesteuert und sobald Zähne 116 dieser Drehsegmente 114 mit dem Zahnkranz 112 kämmen, werden die beiden anderen Drehsegmente 114 durch entgegengesetztes Ansteuern der zugeordneten Zylinder-Kolbenaggregate 126 zuerst in axialer Richtung zurückgezogen, bis der gefangengehaltene Verriegelungsstift 120 an der Anschlagplatte 136 zur Anlage gelangt und die betreffenden Zähne 116 ausser Eingriff mit dem Zahnkranz 112 gekommen sind und dann zurückgedreht, bis der andere Verriegelungsstift 120 an der Anschlagplatte 136 anliegt und somit wieder die neutrale Stellung dieser Drehsegmente 114 erreicht sind. Durch das wechselseitig Ansteuern jeweils der Paare einander gegenüberliegender Drehsegmente 114 ist ein unbegrenztes Drehen des Drehtellers 90 und somit des Führungselements 56 in beiden Drehrichtungen ermöglicht.

Diese Art des Drehantriebs benötigt in Durchmesser Richtung des Antriebsmoduls 38 gesehen wenig Platz und erlaubt die Freigabe des dazwischen angeordneten Kardangelenks 42.

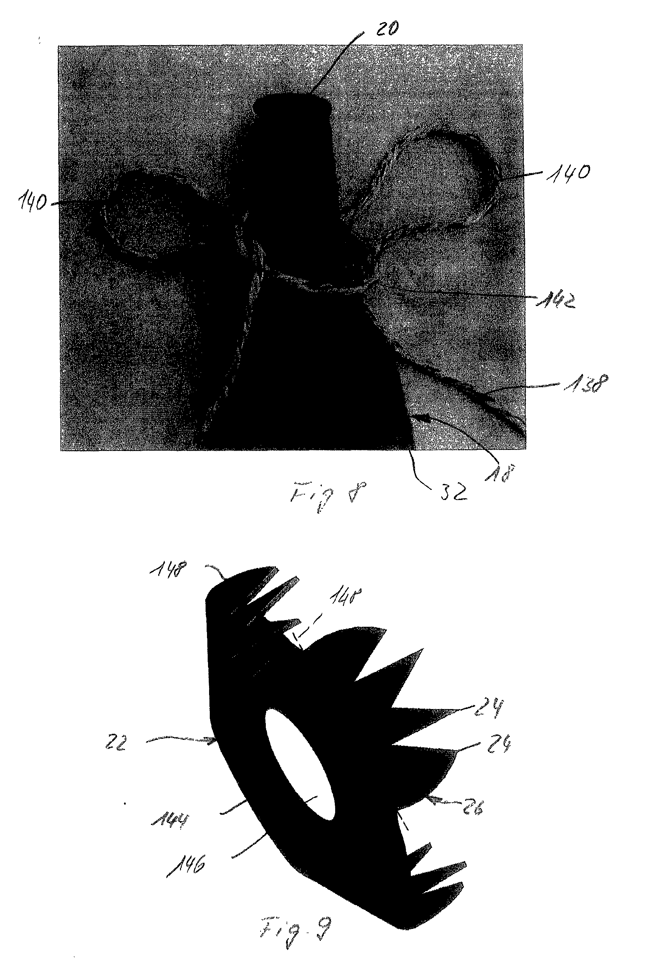

Fig. 8 zeigt eine weitere Ausbildungsform zum dichten Verschliessen des aufgeblasenen Ballons 18. Das Verschlusselement 22 ist in diesem Fall durch einen Schnurabschnitt 38 gebildet. Dieser wird wie in der Figur gezeigt, um den Hals 20 des Ballons angelegt und nachdem der Hals 20 des Ballons 18 auf einen Adapter 106 aufgesteckt worden ist, werden die mit 140 bezeichneten Schnurlaschen am Kopf 44 befestigt. Dadurch wird beim Zurückziehen des Roboters 34 in Arbeitsrichtung 30', nachdem der betreffende Ballon 18 aufgeblasen worden ist, die um den Hals 20 des Ballons 18 herumverlaufende Schlaufe 142 des Schnurabschnitts 138 zusammengezogen und dadurch der Ballon 18 abgedichtet. Beim weiteren Zurückziehen des Roboters 34 wird der Adapter 106 aus dem Hals 20 gezogen und werden die Schnurlaschen 140 frei gegeben. Diese können beispielsweise mittels eines Klebebandabschnitts am Kopf befestigt sein, welcher bei einer bestimmten Kraft in der Art einer Sollbruchstelle wirkend die Schnurlaschen 140 freigibt. Es ist jedoch auch denkbar diese in Klammern kraftschlüssig freigebbar zu halten. Selbstverständlich sind auch gesteuerte Klammern denkbar.

Fig. 9 zeigt gegenüber den Fig. 1 und 3 vergrössert eine weitere mögliche Ausbildungsform eines Verschlusselements 22 mit drei, je vier Spitzen 24 aufweisenden Zerstörungselementen 26. Ein plattenartiger Teil 144 des Verschlusselements 22 weist in der Mitte einen kreisförmigen Durchlass 146 auf und ist umfangsseitig sechseckig ausgebildet. Von jeder zweiten Seite des sechseckigen Randes steht rechtwinklig zum plattenartigen Teil 144 von diesem ein schildartiges Zerstörungselement 26 mit den Spitzen 24 ab. Im Verbindungsbereich der Zerstörungselemente 26 mit dem plattenartigen Teil 144 ist in bevorzugter Weise eine Sollbruchstelle 148 ausgebildet, welche mittels einer gestrichelten Linie angedeutet ist. Diese Sollbruchstelle bzw. Sollbruchlinie ermöglicht das Abbiegen bzw. Abtrennen der Zerstörungselemente 26 vom plattenartigen Teil 144 infolge der Kraftwirkung des Liners 28 nach dem Zerstören des betreffenden Ballons 18. Das Verschliessen des aufgeblasenen Ballons 18 mittels eines in den Fig. 1 und 3 bzw. 9 gezeigten Verschlusselements 22 erfolgt auf bekannte Art und Weise, indem der Hals 20 des Ballons U-förmig bzw. V-förmig gefaltet in den Durchlass 146 gezogen wird.

Selbstverständlich ist es auch denkbar, die Ballone 18 durch Schweissen abzudichten. Dazu können am Kopf 44 des Roboters 34 zwei aufeinander zu und voneinander weg bewegbare heizbare Schweissbacken vorgesehen sein, die den Hals 20 zwischen sich aufnehmen und diesen verschweissen können. Weiter ist es denkbar, jeden Ballonhals 20 mit einem Rückschlagventil auszurüsten.

Das Ausrichten und Fixieren des Rohres 16 in der Rohrleitung 10 mittels des Roboters wird wie folgt durchgeführt. Nach dem Einzug des Rohres 16 oder zusammen mit diesem wird der Roboter 34 entgegen der Arbeitsrichtung 30' in die Rohrleitung 10 eingeführt. Dabei befinden sich die Stützelemente 52 und das Führungselement 56 in der in der Fig. 4 gezeigten Ruhestellung bzw. Ruhelage. Stützrollen 80 wälzen sich dabei an der Innenwand 88 der Rohrleitung 10 ab. Nach dem Zurückziehen des Roboters 34 an eine gewünschte Stelle, wo ein Ballon 18 zu setzen ist, werden wie weiter oben beschrieben, die Stützelemente 52 ausgefahren, bis mindestens fünf der sechs Stützrollen 80 an der Innenwand 88 anliegen. Befindet sich das Führungselement 56 bei einem der Stützhebel 54, bleibt dieser wie weiter oben beschrieben in Ruhestellung. Unter Beobachtung durch die Fernsehkamera 48 wird dann mittels des Antriebsmoduls 38 das Führungselement 56 zum Rohr 16 gedreht und dann das Führungselement 56 ausgeschwenkt, so dass das Rohr 16 in die Aufnahmenut 96 zu liegen kommt. Anschliessend wird das Führungselement 56 mit dem damit gehaltenen Rohr 16 mittels des Antriebsmoduls 38 in die in Umfangsrichtung der Rohrleitung 10 gesehen gewünschte Lage verbracht. Sobald diese erreicht ist, wird ein Ballon 18 aufgeblasen und der Roboter 34 um einen kurzen Weg zurückgezogen. Dieses Zurückziehen bewirkt einerseits das Verschliessen des Ballons 18 und andererseits ein Herausziehen der Aufnahme 104 und des Adapters 106 um einen bestimmten Hub, wodurch die Druckluftleitung mit dem nächstfolgenden Adapter 106 verbunden wird, um den betreffenden Ballon 18 an der nächsten gewünschten Position zu setzen. Sollte ein Ballon 18 beim Setzen defekt gehen oder das Verschliessen des Ballons 18 nicht richtig funktionieren, ist dies mittels der Fernsehkamera 48 erkennbar, wonach an der gleichen Stelle ein zweiter Ballon 18 gesetzt werden kann. Zum Setzen eines nächsten Ballons 18 wird der Roboter 34 in Arbeitsrichtung 30' an die gewünschte Stelle weiter zurückgezogen. Dies kann gegebenenfalls bei in Arbeitsstellung verbleibenden Stützhebeln 54 und sich in Arbeitslage befindendem Führungselement 56 erfolgen. Es ist jedoch auch möglich, nur das Führungselement 56 oder dieses und die Stützhebel 54 in die Ruhelage bzw. Ruhestellung zurück zu verschwenken. In dieser Art und Weise werden die notwendige Anzahl Ballone 18 zum Fixieren des Rohres 16 gesetzt. Anschliessend wird in der der Arbeitsrichtung 30' des Roboters entgegengesetzten Einbringrichtung 30 der Liner 28 in die Rohrleitung 10 eingebracht.

Falls auf ein Ausrichten des Rohres 16 verzichtet werden kann, kann der Roboter 34 wesentlich einfacher ausgebildet sein als in den Fig. 4 bis 7 gezeigt. In diesem Fall weist er nur noch den Kopf 44 mit der Magazineinrichtung 46 für die Ballone sowie eine Fernsehkamera 48 und Beleuchtungselemente 50 auf. In diesem Fall können die Steuerventile zum Aufblasen der Ballone 18 in einem kleinen an den Kopf 44 anschliesssenden Modul oder im Kopf 44 selber angeordnet sein.

Es ist auch denkbar, den Roboter selbst fahrend in bekannter Art und Weise auszubilden. Ein selbstfahrender Roboter eignet sich jedoch insbesondere bei Rohrleitungen 10 grösseren Durchmessers. Der gezeigte und beschriebene Roboter ist für eine Rohrleitung 10 mit einem Innendurchmesser von 100 mm vorgesehen und weist bei sich in Ruhestellung bzw. Ruhelage befindenden Stützelementen 52 und Führungselement 56 einen Aussendurchmesser von ca. 80 mm auf. Dieser Roboter 34 kann in Rohrleitungen 10 bis zu einem Innendurchmesser von ca. 200 mm eingesetzt werden. Für grössere Rohrleitungen 10 ist ein entsprechend grösserer Roboter einzusetzen. Infolge des modularen Aufbaus und der kurzen möglichen Baulänge der Module 36, 38, 40 ist der Roboter 34 kurvengängig.

Der Vollständigkeit halber sei erwähnt, dass die Ballone eine andere Form als gezeigt aufweisen können. Insbesondere könnten sie ringartig ausgebildet sein.

Auch die Magazineinrichtung 46 lässt sich unterschiedlich ausgestalten. So wäre es denkbar, die Ballone 18 je mit einem Adapter ausgestaltet hintereinander in einem Magazin anzuordnen und mittels eines Förderelements nacheinander zu einem Anschluss an die Druckleitung zu fördern. In diesem Fall bilden die Adapter vorzugsweise zugleich ein Verschlussventil bzw. Verschlusselement für den Ballon 18.

## Patentansprüche

1. Verfahren zum Befestigen eines langgestreckten Gegenstandes, wie eines Lichtwellenleiterkabels oder eines zur Aufnahme eines Lichtwellenleiterkabels bestimmten Rohres, in einer nicht begehbaren Rohrleitung, insbesondere Abwasserrohrleitung, bei dem - nach dem Einziehen des Gegenstandes (14) in die Rohrleitung (10) - Ballone (18) in die Rohrleitung (10) eingebracht und in einem Abstand hintereinander positioniert und aufgeblasen werden, sodass der Gegenstand (14) zwischen der Rohrleitung (10) und den Ballonen (18) fixiert ist, und anschliessend ein Liner (28) nach dem Umstülp- beziehungsweise Insituform-Verfahren in die Rohrleitung (10) eingebracht wird, der im ausgehärteten Zustand den Gegenstand (14) zwischen sich und der Rohrleitung (10) einschliesst, wobei die Ballone (18) gelüftet oder zerstört sind.

2. Verfahren nach Anspruch 1, **dadurch gekennzeichnet, dass** jeweils ein Ballon (18) wenigstens annähernd zu dem Zeitpunkt gelüftet oder zerstört wird, zu dem der Liner (28) mit seinem vorauslaufenden Ende (29) diesen Ballon (18) erreicht.

3. Verfahren nach Anspruch 1 oder 2, **dadurch gekennzeichnet, dass** der Gegenstand (14), vor dem Aufblasen wenigstens eines Ballons (18), in seiner Lage - in Umfangsrichtung der Rohrleitung (10) - positioniert wird.

4. Verfahren nach einem der Ansprüche 1 bis 3, **dadurch gekennzeichnet, dass** die Ballone (18) mittels eines rohrleitungsgängigen Roboters (34) positioniert und aufgeblasen werden.

5. Verfahren nach Anspruch 3 und 4, dadurch gekenn zeichnet, dass der Gegenstand (14) mittels des Ro boters (34) positioniert wird.

6. Vorrichtung zum Fixieren eines langgestreckten Gegenstandes, wie eines Lichtwellenleiterkabels oder eines zur Aufnahme eines Lichtwellenleiterkabels bestimmten Rohres, in einer nicht begehbaren Rohrleitung, insbesondere Abwasserrohrleitung, mit einem in der Rohrleitung (10) bewegbaren Roboter (34), der eine Magazineinrichtung (46) für Ballone (18) und an seinem - in Arbeitsrichtung (30') gesehen - nachlaufenden Ende einen Adapter (106) für den Hals (20) mindestens eines der Ballone (18) aufweist, wobei der Adapter (106) zum Aufblasen eines Ballons (18) mit einer Überdruckquelle verbindbar ist.

7. Vorrichtung nach Anspruch 6, **dadurch gekennzeichnet, dass** die Magazineinrichtung (46) eine Anzahl Aufnahmen (104) und Adapter (106) aufweist.

8. Vorrichtung nach Anspruch 6 oder 7, **gekennzeichnet durch** von einer Ruhestellung in eine Stützstellung und wieder zurück bewegbare Stützelemente (52) zum drehfesten Abstützen des Roboters (34) an der Rohrleitung (10).

9. Vorrichtung nach Anspruch 8, **dadurch gekennzeichnet, dass** der Roboter (34) ein in seiner, bezüglich der Längsachse des Roboters (34), radialen Lage verstellbares, um die Längsachse drehbares Führungselement (56) für den Gegenstand (14) aufweist.

10. Vorrichtung nach Anspruch 9, **dadurch gekennzeichnet, dass** die Stützelemente (52), in Abhängigkeit von der Drehlage des Führungselements (56), individuell aus der Stützstellung in Richtung gegen die Ruhestellung bewegt werden, um das vorbei Bewegen des Gegenstandes (14) mittels des Führungselements (56) am betreffenden Stützelement (52) zu ermöglichen.

11. Vorrichtung nach einem der Ansprüche 6 bis 10, **dadurch gekennzeichnet, dass** die Ballone (18) ein Verschlusselement (22) aufweisen, das infolge des von einem Liner (28) ausgeübten Kraftwirkung öffnet oder den betreffenden Ballon (18) zerstört.

12. Vorrichtung nach einem der Ansprüche 6 bis 11, dass eine Drehantrieb (58) ein Drehsegment (114) mit zwei abwechslungsweise mit einem Drehrichtungssteuerelement (122) zusammenwirkenden Verriegelungsorganen (112) und entlang zweier je einem der Verriegelungsorgane zugeordneten Kreissektor (118) angeordneten Reihen vom Zähnen (116) aufweist, die Zähne (116) zum Kämmen mit einem Zahnkranz (112) bestimmt sind, und die Drehsegmente (114) mittels eines Hubantriebs (126) angetrieben sind.
